# EUROPEAN PATENT SPECIFICATION

(11) **EP 3 429 918 B1**
(45) Date of publication and mention of the grant of the patent: **04.11.2020**
(21) Application number: 17770870.8
(22) Date of filing: 17.03.2017
(51) Int. Cl.: B63B 35/44, B63B 22/04, F03B 13/18, F03B 13/20, F03B 13/12, E21B 47/00

(54) **RECHARGEABLE AUTONOMOUS ROVS WITH AN OFFSHORE POWER SOURCE**
WIEDERAUFLADBARE AUTONOME ROVS MIT EINER OFFSHORE-STROMQUELLE
ROV AUTONOMES RECHARGEABLES AYANT UNE SOURCE D'ALIMENTATION EN MER

(30) Priority: 18.03.2016 US 201663310478 P; 22.07.2016 US 201615217797; 22.12.2016 US 201662437793 P
(43) Date of publication of application: 23.01.2019
(73) Proprietor: Oceaneering International Inc., Houston, TX 77041 (US)
(72) Inventor: CHANCE, Thomas, Lfayette, Louisiana 70508 (US); KERINS, Kevin Frances, The Woodlands, Texas 77380 (US); MANCINI, Christopher S, Houston, Texas 77355 (US); MOLES, Peter Andrew Robert, Cypress, Texas 77433 (US)
(74) Representative: Potter, Julian Mark
(86) International application number: PCT/US2017/023043
(87) International publication number: WO 2017/165232

(56) References cited:
- WO-A2-2013/050411
- US-A- 5 995 882
- US-A1- 2002 040 783
- US-A1- 2007 024 234
- US-A1- 2015 112 513
- US-A1- 2015 307 173
- US-A1- 2015 343 317

## Description

### FIELD OF THE INVENTION

Many offshore oilfields comprise multiple subsea wells spread out over a large area. These wells are typically clustered together in groups and tied back to a central production platform such as a floating vessel located near an oil platform (a floating production storage and offloading vessel or FPSO) via subsea umbilicals that provide power and data conduits for controlling and monitoring the wells remotely. These well clusters can be multiple miles from the production platform.

Due to the large separation distance between wells and production platform, any maintenance or repair must be carried out using some form of in-field support vessel. This work almost always involves the use of a remotely operated vehicle (ROV) installed on the vessel.

In-field support vessels are expensive to operate and are frequently unable to work due to adverse weather conditions. If work is required in multiple locations simultaneously, then more than one vessel is required.

The challenge is to provide an alternative to in-field support vessels that is more cost-effective and can work regardless of weather conditions.

US 2007/024234 A1 discloses charging system for an unmanned underwater vehicle (UUV) which is disposed within a submerged docking station. The charging system includes a battery, a fuel cell, a fuel source, and a charge controller. The battery supplies electrical power to an electrical distribution bus in the docking station. The charge controller monitors the charge state of the battery and, when needed, activates the fuel cell to recharge the battery.

US 2015/112513 A1 discloses a remotely operated vehicle integrated system comprising one or more remotely operated vehicles (ROV) configured to be deployed substantially continuously subsea and one or more a tether management systems configured to be deployed substantially continuously subsea. The ROVs and tether management systems are typically deployed substantially continuously subsea where a first signal interface, e.g. for power and/or data, is operatively connecting the signal source deployed substantially permanently subsea and one or more of the ROVs operatively connected the signal source.

### FIGURES

The figures supplied herein illustrate various embodiments of the invention.
**Fig. 1** is a block schematic diagram of an exemplary embodiment of the claimed invention;
**Fig. 2** is a block diagram of a signal distribution hub comprising a plurality of inputs and outputs;
**Fig. 3** is a block schematic diagram of a further exemplary embodiment of the claimed invention;

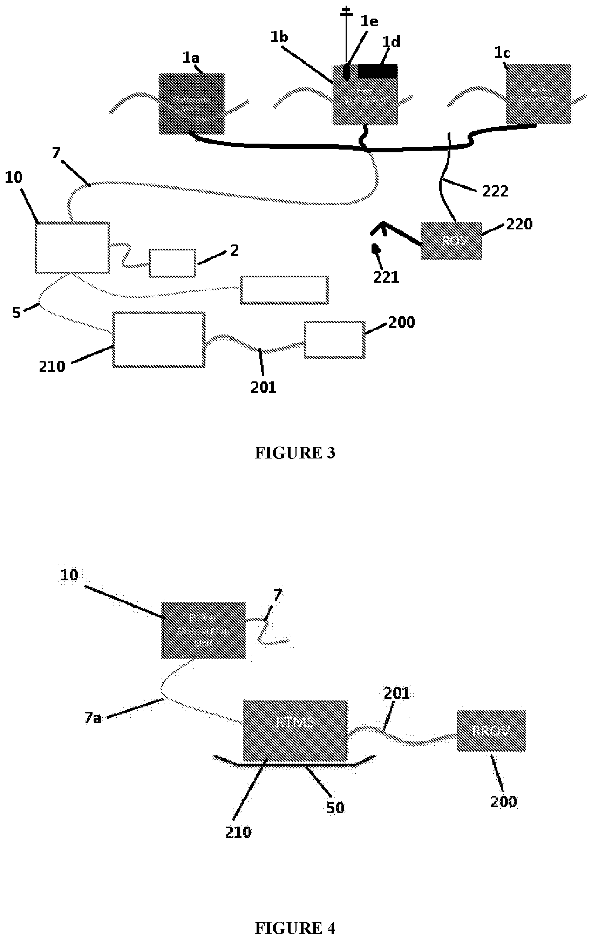

**Fig. 3** is a block schematic diagram of a further exemplary embodiment of the claimed invention;
**Fig. 4** is a block schematic diagram of a further exemplary embodiment of the claimed invention;

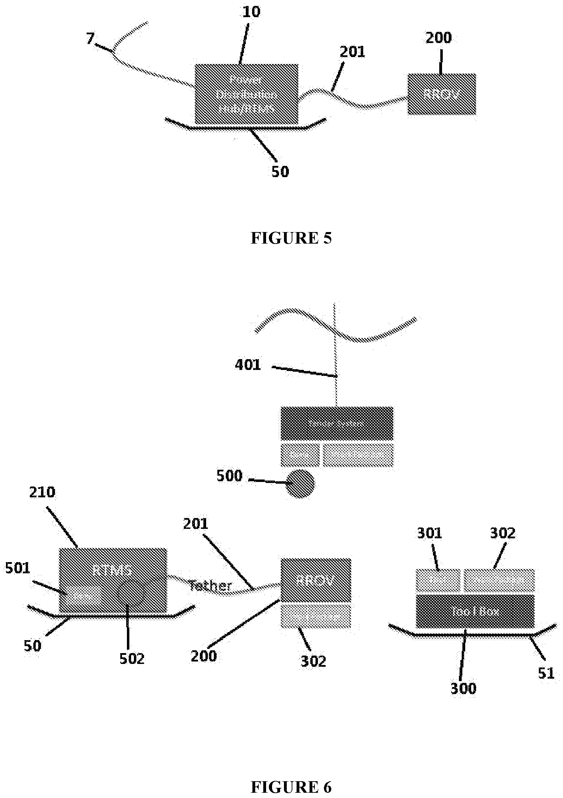

**Fig. 5** is a block schematic diagram of a further exemplary embodiment of the claimed invention;
**Fig. 6** is a block schematic diagram of a further exemplary embodiment of the claimed invention.

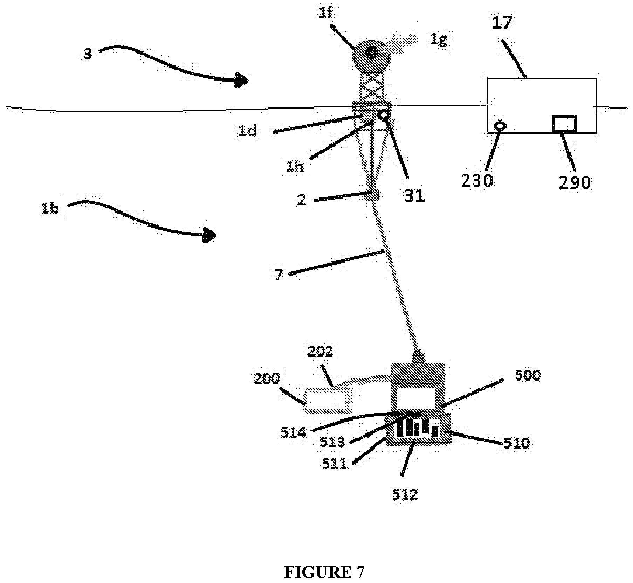

**Figs. 7-9** are diagrammatic illustrations of a exemplary buoy -based power systems; and

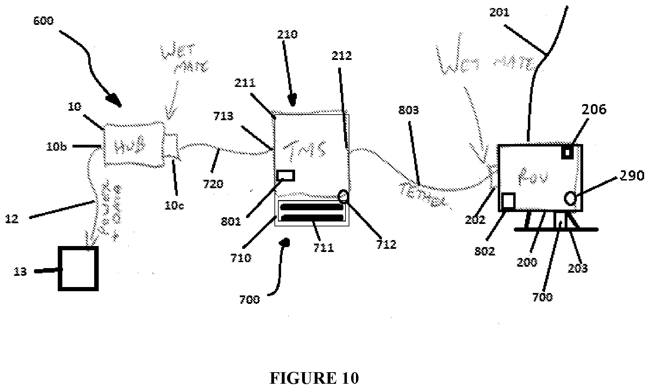

**Fig. 10** is a block diagram of an exemplary resident ROV system.

### DESCRIPTION OF VARIOUS EMBODIMENTS

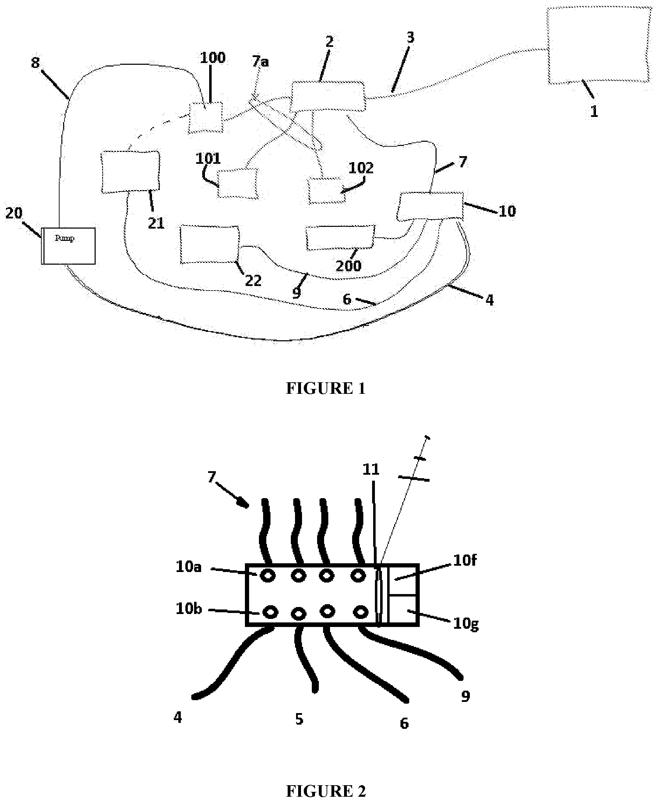

Referring to **Fig. 1**, in a first embodiment a subsea umbilical and signal distribution hub (SDH) system comprises signal source 1, signal carrier 7 operatively in communication with the signal source 1, and SDH 10. As used herein, "signal" may be a power signal, a data signal, or the like, or a combination thereof, including electromagnetic signals and optical signals.

SDH 10 may be gravity-based, or affixed to the seabed via pin pile. As more fully described herein below, in embodiments SDH 10 comprises one or more power/data receptacles for connecting to subsea devices; one or more power/data receptacles which may be configured to accept either jumper leads for routing power/data to remote devices or directly-mounted devices or the like; electrical power switching and management controls; data switching and management controls; and/or one or more acoustic transceivers for communicating with subsea positioning equipment, e.g. acoustic transponders, acoustic modems, and the like, or a combination thereof.

Referring additionally to **Fig. 2**, SDH 10 typically comprises one or more signal input connectors 10a operatively in communication with one or more signal carriers 7 and one or more signal output connectors 10b operatively in communication with at least one signal input connector 10a. In embodiments signal output connector 10b comprises a plurality of such signal output connectors, where each signal output connector 10b of the plurality of signal output connectors is typically operatively in communication with one or more signal input connectors 10a and further adapted to be connected to one or more signal output carriers such as signal carriers 4,5,6, and 9.

Referring back to **Fig. 1**, signal source 1 may comprise a power signal source, a data signal source, or the like, or a combination thereof. If a power signal source is present, the power signal source may comprise platform based power source 1a (**Fig. 3**), buoy-based power source 1b (**Fig. 3**), shore-based power source 1c (**Fig. 3**), or the like, or a combination thereof.

Buoy-based power sources 1b (**Fig. 3**) may comprise one or more single or dual/redundant power generation systems 1d (**Fig. 3**) that can be easily refueled by a vessel of opportunity and may further comprise one or more data transmitters 1e (**Fig. 3**) configured to communicate to a remote data receiver, such as a platform or shore based data receiver. Data transmitters 1e may communicate via satellite or cellular communications or the like.

Signal input connector 10a may be configured to accept a jumper lead, such as signal carrier 7, for routing power to a remote device such as RROV 200 and/or a directly-mounted device. Additionally, signal output connector 10b may be configured to provide a signal received via the signal carrier 7 to a subsea device, by way of example and not limitation such as via signal carrier 5 to subsea pump 20.

Where SDH 10 is configured to receive and distribute a power signal, SDH 10 may further comprise signal switch 10f (**Fig. 2**) configured as an electrical power switch and signal manager 10g (**Fig. 2**) configured as a power manager operatively disposed intermediate signal input connector 10a and signal output connector 10b.

Where SDH 10 is configured to receive and distribute a data signal, e.g. from data source 1a, SDH 10 may further comprise one or more signal input connector 10a configured as input data connectors operatively in communication with signal source 1a configured as a data source and one or more output signal output connectors 10b configured as data connectors operatively in communication with input data connector 10a. Additionally, in this embodiment SDH 10 may further comprise signal switch 10f (**Fig. 2**) configured as a data switch and signal manager 10g (**Fig. 2**) configured as a data manager operatively disposed intermediate signal input connector 10a and signal output connector 10b.

Referring back to **Fig. 1**, in a further embodiment, umbilical terminator 2, which may be a pre-existing umbilical terminator assembly, may be present, operatively in communication with signal source 1 and have pre-existing umbilical connections to subsea equipment and wells such as via umbilical 7a, and disposed intermediate signal source 1 and SDH 10 signal input connector 10a. Typically, in this embodiment signal carrier 7 is operatively in communication with umbilical terminator 2 and, accordingly, with signal source 1 via umbilical terminator 2 and umbilical terminator 2 is operative to provide a signal received from signal source 1 to SDH 10 signal input connector 10a via signal carrier 7. By way of example and not limitation, signal source 1 may provide a signal to umbilical terminator 2 via umbilical 3 and then that signal received at umbilical terminator 2 may be provided to SDH 10 signal input connector 10a via signal carrier 7 where signal carrier 7 is operatively connected to umbilical terminator 2.

In other embodiments, referring generally to **Fig. 3**, signal carrier 7 is dedicated to SDH 10 and completely isolated from another umbilical such as umbilical 3 which may be used to control and/or monitor a well 100.

In certain embodiments SDH 10 further comprises transceiver 11 (**Fig. 2**), which may be an acoustic transceiver, operatively in communication with SDH 10.

In a further embodiment, referring now to **Fig. 7**, subsea power system 1b comprises one or more surface buoys 3 and one or more subsea battery banks 510 operatively coupled to each other to allow provision of electrical power from one or more surface buoys 3 to external equipment.

In certain embodiments, vehicle 200, e.g. an ROV, AUV, or surface vehicle such as an autonomous surface vehicle (ASV) may be present and comprises vehicle power inlet 202 configured to cooperatively interface with subsea battery bank 510 such as via second power outlet 514.

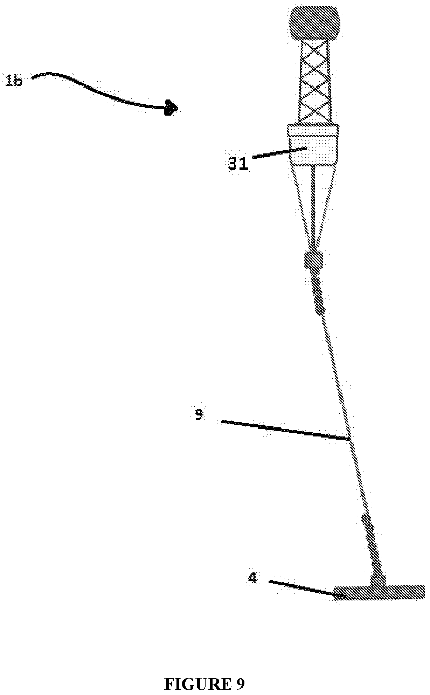

Subsea power system 1b typically comprises controller 32, electrical power generator 1d, and surface buoy power outlet 1h operatively in communication with electrical power generator 1d, all of which are typically housed at least partially in housing 31 (**Fig. 9**). Electrical power generator 1d may comprise a diesel power generator, solar cells, fuel cells, wave generators, wind turbines, or the like, or a combination thereof.

Subsea battery banks 510 typically comprise one or more subsea battery bank power inlets 513 operatively in communication with an associated surface buoy power outlet 1h and with an associated battery bank 512, which may comprise one or more rechargeable subsea batteries 512, and one or more subsea battery bank power outlets 514, each of which is associated with at least one battery bank 512. These components are typically housed in housing 500.

In certain embodiments, surface buoy 3 further comprises radar 1g which is disposed within radome 1f.

Control umbilical 7 may also be present and deployed and operatively in communication between surface buoy 3 and a predetermined seabed location. Additionally, counterweight 2 may be deployed, e.g. along control umbilical 7 or intermediate control umbilical 7 and surface buoy 3 and configured to minimize roll and maximize vertical displacement of radome If with respect to a water surface.

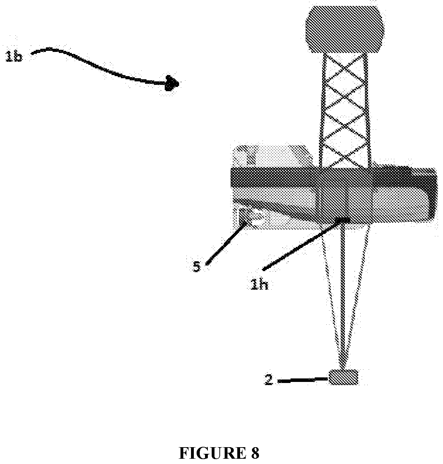

Referring additionally to **Fig. 8**, in embodiments surface buoy 3 further comprises one or more thrusters 5, which may be electrically and/or hydraulically powered thrusters, capable of operating in dynamic positioning mode to hold a position when surface buoy 3 is deployed on a body of water.

Referring additionally to **Fig. 9**, in certain embodiments surface buoy 3 is configured to be moored to a seabed such as via anchor 4 (**Fig. 9**) and cable 9 (**Fig. 9****)**.

Referring now to **Fig. 10**, in a further embodiment, resident remotely operated vehicle (RROV) system 600 comprises one or more remotely operated vehicles 200 (ROV) configured to be disposed subsea for an extended time, each ROV 200 comprising ROV controller 207, ROV electrical power connector port 201; one or more electrical power supplies 700 dedicated to each such ROV 200; and one or more ROV cages or, equivalently, resident tether management systems (RTMS) 210 configured to be disposed subsea for an extended time.

Electrical power supply 700 typically comprises housing 710, which is configured and constructed of a material sufficient for extended use subsea, one or more power sources 711 having electrical capacity sufficient to power and associated ROV 600 for a predetermined time, and electrical power supply outlet 712 operatively connected to power source 711 and configured to be selectively operably engagable with ROV electrical power connector port 201. In embodiments, power source 711 may comprise one or more rechargeable batteries, one or more fuel cells, or the like, either alone or in combination.

In embodiments, RTMS 210 comprises one or more RTMS power supplies 211, where at least one, if not each, RTMS power supply 211 is operatively in communication with cage power supply power outlet 212 which is configured to be selectively and operatively connected to electrical power supply outlet 712. In embodiments, RTMS power supplies 211 may comprise one or more rechargeable batteries, one or more fuel cells, or the like, either alone or in combination. In other embodiments, electrical power supply 700 augments or is otherwise part of, in whole or in part, RTMS power supply 211.

In contemplated embodiments electrical power supply 700 may further comprise skid 203 operatively connected to ROV 200. In such embodiments, electrical power supply 700 typically comprises electrical capacity sufficient to power ROV 200 for a predetermined time.

Data transceiver 206 may be present and operatively in communication with operators located onshore, on a platform, or an FPSO.

In certain embodiments, RROV system 600 further comprises one or more subsea docking hubs 10 which comprise signal connector port 10b operatively in communication with subsea structure 13 which is operatively in communication with a surface structure such as, by way of example and not limitation, a vessel, a platform, a rig, a shore based facility, or the like, or a combination thereof. Subsea docking hub signal connector port 10b may comprise a power signal connector port, a data signal connector port, or the like, or a combination thereof.

Umbilical 201 may be present and configured to supply a data and/or power signal to ROV 200 and be operatively disposed intermediate signal docking hub 10 and subsea structure 13. In such embodiments, RTMS 210 may further comprise a signal connector 10c operatively in communication with umbilical 201, where signal connector 10c and may comprise a wet mate power and/or data connector.

In contemplated embodiments, ROV 200 may be configured to operate as either a conventional tethered ROV or as an ROV which is also able to be coupled/decoupled from a tether such as umbilical 201 and function as a resident autonomous underwater vehicle (RAUV) that is not coupled to a tether. When functioning as an RAUV, ROV 200 may draw power from electrical power supply 700 dedicated to ROV 200 which may be part of skid 202 which may also be mounted to ROV 200.

Where tether 201 comprises a "connect and disconnect" ability, i.e. a coupler/decoupler, tether 201 may comprise data and power connector 201a configured to provide power, data, and/or control. It may further comprise connector 203 configured to latch and unlatch tether 201 to ROV 200, where connector 203 comprises an electro-mechanical or hydraulic type collet connector.

Each ROV 200 and RTMS 210 may further comprise one or more power management systems, illustrated at 801,802, which may further be operatively in communication with computer 803 which itself may be deployed subsea or at a surface location.

**In the operation of exemplary embodiments,** SDH 10 typically operates as a subsea signal hub to provide a signal pathway to RROV 200 and/or other devices that reside permanently at or proximate to well cluster 100-102. As discussed below, SDH 10 may also be used for other purposes, including signal communications to and from RROV 200, an autonomous underwater vehicle (not shown in the figures), and/or a hybrid system (not shown in the figures); powering high-power subsea devices and systems such as dredge unit 22, flow assurance systems such flowline remediation and well stimulation system 21, and/or various subsea pumping and injections systems such as pump 20; powering asset integrity equipment 21; and/or providing emergency power/data to one or more subsea wells 100-102 in the event of failure of the primary control umbilical such as by using a secondary source.

Referring generally to **Figs. 3-6**, in a first operative embodiment, a signal may be provided to a subsea device such as pump 20, subsea dredge 22, RROV 200, wells 100-102, or the like, or a combination thereof, via SDH 10, which is as described above, by disposing SDH 10 subsea and disposed SDH umbilical 7 proximate to a seafloor. SDH 10 may be affixed to the seabed via a pin pile or the like.

SDH umbilical 7, which may be dedicated to SDH 10 or connected to SDH 10 from another device such as umbilical terminator 2, operatively connects SDH 10 to signal source 1, directly or indirectly, and SDH signal output connector 10b is made available for connection to a subsea device such as RROV 200, an autonomous underwater vehicle (not shown in the figures), a hybrid system (not shown in the figures), a high-power subsea device such as high-power subsea dredge unit 22, a flow assurance system, a subsea pump 20, a subsea injections system, and/or asset integrity equipment 21, or the like, or a combination thereof. RROV 200 may be an RROV residing permanently at or proximate to well cluster 100-102.

Once connected, a signal may be received from signal source 1, where, as noted before, the signal comprises a power signal and/or a data signal, and the received signal provided to the subsea device via one or more SDH signal output connectors 10b.

In certain embodiments, SDH 10 may be used to provide emergency power/data to well 100-102 in the event of failure of a primary control umbilical.

Referring to **Fig. 1**, in an embodiment power and control may be accessed from an existing umbilical such as umbilical 3 using spare conductors and fibers. The signal may be provided to SDH 10 via signal carrier 7 which may comprise a flying lead 7a.

In this or other embodiments, a signal may be provided to a subsea device via SDH 10, which is as described above, by deploying a device such as ROV 200 subsea; deploying resident tether management system (RTMS) 210 (**Fig. 3**) which is configured to be deployed subsea and remain deployed for an extended period of time, e.g. by lowering RTMS 210, with RROV 200 installed, such as by using fast-line 401; deploying jumper 5, which may be lowered or removed, from RTMS 210; connecting jumper 5 to SDH 10 such as via ROV 220 or RROV 200; and once in place, switching the signal on at SDH 10.

RROV 200 may be used as well to connect a power and/or other umbilical such as signal carrier 4 to a subsea device from SDH 10.

Once a signal task is completed, RROV 200 may be flown out such as with a full tether; a predetermined set of RROV and RTMS function checks may be completed; and RROV 200 may be returned to RTMS 210.

In either method, a signal check, such as a communication and/or power signal check, may be performing after the signal is switched on, i.e. made available via SDH 10.

In a further embodiment, signal carrier 7 may be a dedicated subsea umbilical used with SDH 10, as illustrated in **Fig. 4****.** Umbilical 7 may be laid on the seafloor from production platform 1a (**Fig. 3**) or shore 1c (**Fig. 3**) or the like to well cluster 100-102, where it terminates in SDH 10. In certain of these embodiments umbilical 7 may be completely isolated from those that control and monitor wells 100-102 themselves and pose little to no risk to the oil production process.

Referring to **Fig. 2**, in a further embodiment, dedicated signal carrier 7 which may be a subsea umbilical is provided from buoy 1b or surface 1c and connected to SDH 10. In this case as well, umbilical 7 may be completely isolated from those that control and monitor wells 100-102 themselves and pose little to no risk to the oil production process. Buoy 1b may contain a single power generation system 1d or dual/redundant power generation systems 1d that can be refueled by such as by a vessel of opportunity. Buoy 1b may further communicate to platform 1a or shore 1c such as via satellite or cellular communications.

In certain embodiments, one or more devices such as ROV 220 may be deployed subsea, such as by using fast-line 401, and RTMS 210 lowered with RROV 200 installed. RTMS 210 and RROV 200 can then be rested on the seafloor such as via mud-mat 50. One or more jumpers 5 may be lowered or removed from RTMS 210 and connected to SDH 10 with such as via ROV 220. Once in place, power and communications may be switched on at SDH 10. Optionally, communication and power checks may be performed.

As needed, RROV 210 may be flown out with full tether and RROV and RTMS function checks completed. RROV 210 may be used as well to connect a power and/or other umbilical such as 4 to a subsea device such as pump 20, subsea dredge 22, asset integrity system 21, or the like, from SDH 10.

Once connected, RROV 200 may be returned to RTMS 210 and, as needed, functions such as maintenance checks completed.

In a further embodiment, RTMS 210 may be lowered with RROV 200 installed using, e.g., ROV umbilical 222, and rested on the seafloor such as with mud-mat 50. RROV 200 may be deployed and jumper 5 lowered and/or removed from RTMS 210 and connected to SDH 10. Power and/or communications may be switched on at SDH 10 and RROV 200 returned to RTMS 210.

Once a signal such as power is available at SDH 10, that signal may be provided from SDH 10 to field internal power on RTMS 210 such as by using power switch 10f. Communication and power checks may be performed. Once the desired task, e.g. provision of power and/or data, is completed, RROV 200 may be flown out such as with a full tether 201 and RROV and RTMS function checks completed. RROV 200 may be returned to RTMS 210 and maintenance checks may be completed, e.g. recompensation and the like. A clump-on fast-line may be deployed (if not deployed with RTMS 210) and the umbilical removed from RTMS 210 and connected to the clump-on fast-line. Optionally, one or more components, e.g. RROV 200, may then be recovered to the surface.

With respect to intervention type operations, during inspection RROV 200 may be navigated to subsea hardware such as Christmas trees, manifolds, UTA 2, and the like. If so equipped, video cameras may be used to inspect the hardware for damage, corrosion or leakage. One or more tools such as electric brush tools may be used to clean surfaces as necessary and one or more used to access areas as necessary, e.g. an electric suction pump.

RROV 200 may be used to operate hardware valves and/or for installation of flying leads, such as by flying RROV 200 to the hardware; docking tool 301 such as an integrated electric torque tool into an appropriate receptacle; and opening and/or closing the valve as required, which may comprise counting turns, monitoring torque, and the like, or a combination thereof. As illustrated in **Fig. 6**, tool 301 may be part of or otherwise accessible from tool box 300 and/or part of work package 302.

RROV 200 may be used to obtain cathodic protection (CP) readings by flying RROV 200 to the hardware, placing a probe at a pre-defined location, and taking one or more readings. This may be repeated as necessary.

RROV 200 may be used for fluid injection operations by flying RROV 200 to the desired hardware, docking a hot stab tool into an appropriate receptacle; and, using an HPU on RROV 200, powering a desired tree function. Once completed, the hot stab may be removed.

Referring now to **Fig. 6**, RROV 200 may be used to support other tools subsea as well, such as pump 20 (**Fig. 1**) and/or subsea dredge 22 (**Fig. 1**) and/or tool 301. In an embodiment, a tool such as tool 301 may be lowered to the sea bed such as by using tool deployment frame 300 and/or a fast line 401. Alternatively, tool 301 may already be present such as in subsea tool box 300 or as part of work package 302. In such embodiments, RROV 200 acquires tool 301 and, if needed, plugs hot stab 221 (**Fig. 3**) into tool 301. If not at the correct location, RROV 200 flies tool 301 to a desired location. Using an HPU aboard RROV 200, tool 301 may then be operated as required. In a further tool support embodiment, for electric tools a motor driver available via RROV 200 may be used to operate tool 301 in place or alongside the HPU and, in such embodiments, RROV 200 connected to tool 301 via an appropriate electrical connector. Once the desired operation is completed, hot stab 221 is removed and the tool returned to a tool deployment frame or a subsea tool box.

Referring still to **Fig. 6**, in a further embodiment RROV 200 may be used to fill and/or refill one or more compensation/hydraulic reservoirs 500. In a first fill/refill embodiment, compensation and hydraulic oil refill system 500, which may be built into tool deployment frame 300, is filled such as on a deck of a vessel (not shown in the figures). Typically, tool deployment frame 300 is lowered such as to mudline 51 using fast-line 401 and a fill line connected from a bladder to an RTMS fill port. Once connected, a fill valve is opened on RTMS 210 and, using a mechanical rotary interface on RROV 200, plugged into refill system pump drive 501. Fluid is then pumped until a predetermined RTMS bladder pressure is achieved. When such pressure is achieved or it is otherwise deemed required, RROV 200 is undocked from the tool deployment frame refill pump system and the fill valve on RTMS 210 is closed.

In a second fill/refill embodiment, RROV 200 closes one or more isolation valves on an empty compensation system 502 on RTMS 210. Fast-line 401 is lowered and connected to empty compensation system 502 on RTMS 210 which is then unlocked and returned to a location such as a surface location using fast-line 401. Once at the surface, compensation system 502 is refilled and inspected for damage, wear, and the like. If it passes inspection, compensation system 502 is returned to RTMS 210 using fast line 401 and docked and locked to RTMS 210. Once docked and locked, one or more isolation valves is opened and pressures confirmed.

In the operation of a further embodiment, ROV 220 is deployed and RROV 200 ensured to be properly secured inside RTMS 210. Power and/or communications are switched off at SDH 10. Jumper 5 (**Fig. 3**) is disconnected from RTMS 210 and optionally stored. Fast-line 401 is lowered and connected to RTMS 210 and, once connected, RTMS 210 is recovered to a surface location.

In a further embodiment, RROV 200 may be replaced and/or changed-out subsea by flying RROV 200 outside of RTMS 210 and deploying ROV 220. Fast-line 401 is lowered and secured to RROV 200 and power and/or communications switched off at SDH 10. Tether 201 is disconnected from RROV 200 and may be recovered into RTMS 210. RROV 200 may then be recovered to the surface location.

Once any of the above operations are completed, RROV 200 may be undocked from RTMS 210.

In the operation of a further embodiment, referring now to **Figs. 7-9****,** electrical power may be provided to a subsea power source and/or subsea device by deploying subsea power system 1b to a location subsea and generating power at power generator 1d. The generated power may then be supplied to subsea power supply such as battery pack 500.

For surface buoy 3 which comprises one or more thrusters 5 (**Fig. 8**), thruster 5 may be used in dynamic positioning mode to hold a position of surface buoy 3 once surface buoy 3 is deployed on a body of water.

In addition, vehicle 200, which may be an ROV, AUV, ASV, or RAUV, may be maneuvered to a position proximate subsea battery bank 500, where vehicle 200 comprises vehicle power connector 202 which can be operatively connected to subsea battery bank power outlet 514.

In a further embodiment, referring again to **Fig. 10**, ROV 200 may be deployed subsea, where ROV 200 is as described above. Once ROV 200 is deployed, electrical power supply 700 may be dedicated to and operatively connected to ROV 200, where electrical power supply 700 is as described herein above. RTMS 210 may be deployed subsea as well, where RTMS 210 is as described above. Subsea docking hub 10 is typically also deployed subsea, where subsea docking hub 10 is as described above.

Once deployed, ROV 200 and RTMS 210 are typically operatively connected to subsea docking hub 10. Typically, umbilical 12 is connected from subsea docking hub 10 to subsea structure 13 and a signal, which may be a power and/or data communications signal, is supplied between subsea structure 13 and ROV 200. The signal may be supplied by operatively connecting subsea structure 13 to a surface structure such as a vessel, platform, rig, buoy, or shore base where control consoles are manned, or the like, or a combination thereof, and the signal supplied to subsea structure 13 from the surface structure such as via umbilical 12a and then on to ROV 200 and/or RTMS 210.

In certain embodiments ROV 200 is configured for operations in either a tethered ROV mode or an untethered resident autonomous underwater vehicle (RAUV) mode where ROV 200 is not coupled to ROV tether 201 and, in RAUV mode, becomes an RAUV which draws power from electrical power supply 700, by way of example and not limitation such as when electrical power supply 700 comprises skid 203 mounted to ROV 200. When operating in RAUV Mode, the RAUV is typically provided with a predetermined set of pre-programmed mission objectives to be accomplished via computer 290 which may located onboard the RAUV, by way of example and not limitation comprising navigating to one or more positions subsea, performing one or more predetermined functions at predetermined times, navigating the RAUV to RTMS 210, or the like, or a combination thereof.

The RAUV may be reconnected to ROV tether 201 such as to return to an ROV mode and/or recharge batteries. The RAUV may be navigated to a different RTMS 210 and/or signal distribution hub 10 at a location other than its originating RTMS 210 and/or signal distribution hub 10 or to a remote charging point that allows the transfer of data and recharging of batteries onboard the RAUV.

In any configuration, the amount of power delivered from subsea umbilical 201 to system 600 may vary and the actual amount of power delivered from subsea umbilical 201 to resident system 600 used to determine battery configurations and capacity. Typically, RTMS 210 and ROV 200 are fitted with batteries 711 and power management system 801,802 that allows for charging of batteries 711 and power delivery from batteries 711 to resident system 600 if the power is less than is needed for full operation of resident system 600 and associated tooling. In some embodiments, power management system 801,802 allows for charging of batteries 711 and for power delivery from batteries 711 to resident system 600 and directly from a tether.

Buoy system 1b maybe be deployed by and later provide power support to an autonomous surface vessel (ASV) such as ASV 17. By way of example and not limitation, it ASV leave a first location at a predetermined time, transit at a speed until the vehicle gets to a second location, e.g. one specified by latitude and longitude. The speed may be designated from a set of safe and fuel efficient speeds. A computer, such as computer 290 in the RAUV or ASV 17, may have access to one or more sensors 230 and timers to understand that it may have to change the speed based on current location and elapsed time. Travel time may extend to days to get to the location. Once there, the vehicle may comprise a set of functional instruction programming, e.g. (1) poll for an acoustic beacon that is on the ocean bottom; (2) when it senses the beacon, anchor the vehicle using an anchor system which is part of the vehicle; (3) once anchored, perform additional functions such as tighten an anchor line to maintain communications with the beacon; (4) during its stay proximate the beacon, monitor its position, e.g. a storm may causes the vehicle to drag its anchor, and take necessary steps if it moves too far off location, e.g. pick up its anchor and move back once the seas subside; and (5) after an elapsed time, which may be hours, days, or months, release the anchor and navigate to a further location which may be its first location.

The invention is defined by the independent claims. Preferred embodiments are provided by dependent claims. Further, examples mentioned in the description that do not fall under the scope of the claims are useful for understanding the invention.

## Claims

1. A resident remotely operated vehicle (RROV) system (600), comprising:
a. a remotely operated vehicle (ROV) (200) configured to be disposed and remain resident subsea for an extended time, the ROV comprising an ROV electrical power connector port (201) and an ROV controller (207);
b. an electrical power supply (700) dedicated to the ROV, the electrical power supply comprising:
i. a housing (710) configured for use subsea;
ii. a power source (711) having electrical capacity sufficient to power the ROV for a predetermined time;
iii. an electrical power supply outlet (712) operatively connected to the power source (711) and configured to be selectively operably engagable with the ROV electrical power connector port;
c. a resident tether management system (RTMS) (210) configured to be disposed subsea for an extended time, the RTMS comprising:
i. an RTMS power supply (211);
ii. a hub signal connector; and
iii. an RTMS power supply power outlet (212) configured to be selectively operatively connected to the electrical power supply outlet;
d. a subsea docking hub, comprising:
i. a structure signal connector port; and
ii. an RTMS signal connector port; and
e. a hub umbilical operatively in communication the RTMS signal connector port and the hub signal connector port

2. The resident remotely operated vehicle (RROV) system of Claim 1, wherein the RTMS power supply comprises the electrical power supply (700).

3. The resident remotely operated vehicle (ROV) system of Claim 1, wherein:
a. the ROV comprises a skid operatively connected to the ROV;
b. the electrical power supply is disposed within the skid; and
c. the power source (711) comprises electrical capacity sufficient to power the ROV for a predetermined time.

4. The resident remotely operated vehicle (RROV) system of Claim 1, further comprising a data transceiver operatively in communication with an operator onshore, a vessel, or an FPSO and with the ROV controller.

5. The resident remotely operated vehicle (RROV) system of Claim 1, wherein
the subsea docking hub signal connector port comprises a power signal connector port or a data signal connector port.

6. The resident remotely operated vehicle (ROV) system of Claim 1, wherein the ROV is configured to operate as either:
a. a conventional, tethered ROV comprising a connection to a surface deployed tether (201); or
b. a tethered ROV configured to be selectively connected to a tether (803) deployed from the RTMS or to be selectively disconnected from the tether (803) and function as an autonomous underwater vehicle (AUV) that is not coupled to the tether and draws power from the electrical power supply (700).

7. The resident remotely operated vehicle (ROV) system of Claim 6, wherein the selectively connected tether (803) comprises:
a. a data and power connector for power, data and control; and
b. a connector configured to latch and unlatch the tether to the ROV and, optionally,
wherein the connector comprises an electro-mechanical or hydraulic type collet connector.

8. The resident remotely operated vehicle (ROV) system of Claim 1, wherein:
a. the RTMS comprises a plurality of RTMS; and
b. the tether comprises a length sufficient to provide coverage for a predetermined area for work.

9. The resident remotely operated vehicle (ROV) system of Claim 1, wherein each of the ROV and the RTMS further comprises a power management system (801,802).

10. A method of deploying a remotely operated vehicle subsea, comprising:
a. deploying a remotely operated vehicle (ROV) (200) subsea, the ROV configured to be disposed and remain resident subsea for an extended time, the ROV comprising an ROV electrical power connector port (202);
b. operatively connecting an electrical power supply (700) to the ROV, the electrical power supply dedicated to the ROV, the electrical power supply comprising:
i. a power source (711) having electrical capacity sufficient to power the ROV for a predetermined time; and
ii. an electrical power supply outlet (712) operatively connected to the power source (711) and configured to be selectively operably engagable with the ROV electrical power connector port (202);
c. deploying an RTMS subsea (210), the RTMS configured to be disposed subsea for an extended time, the RTMS comprising:
i. an RTMS power supply (211);
ii. a hub signal connector; and
iii. an RTMS power supply power outlet (212) configured to be selectively operatively connected to the electrical power supply outlet;
d. deploying a subsea docking hub, comprising:
a signal connector port operatively in communication with a subsea structure which is operatively in communication with a surface structure and RTMS signal connector port;
e. deploying a hub umbilical operatively in communication with the RTMS signal connector port and the hub signal connector port subsea;
f. operatively connecting the ROV and the RTMS to the subsea docking hub;
g. connecting an umbilical from the subsea docking hub to a subsea structure; and
h. supplying a signal from the subsea structure to the ROV.

11. The method of deploying a remotely operated vehicle subsea of Claim 10, wherein supplying the signal comprises:
a. operatively connecting the subsea structure to a surface structure or shore base where a control console is manned;
b. supplying a signal to the subsea structure from the control console; and
c. supplying the signal to the ROV and the RTMS via the umbilical and, optionally,
wherein the signal comprises a power signal and a data communications signal.

12. The method of deploying a remotely operated vehicle subsea of Claim 10, further comprising:
a. configuring the ROV for operations in either a tethered ROV mode or an untethered autonomous underwater vehicle (AUV) mode where the ROV is not coupled to an ROV tether and draws power from a battery skid mounted to the ROV; and
b. when operating in the AUV Mode, providing the ROV with a predetermined set of pre-programmed mission objectives, the predetermined set of pre-programmed mission objectives comprising:
i. navigating to a position subsea;
ii. performing a predetermined function;
iii. navigating the ROV to the RTMS and, optionally,
further comprising reconnecting the returned ROV to the ROV tether to return to ROV Mode and recharge the batteries.

13. The method of deploying a remotely operated vehicle subsea of Claim 10, wherein the power source (711) further comprises a battery, the method further comprising:
a. allowing the amount of power delivered from the subsea umbilical to the resident system to vary; and
b. using the actual amount of power delivered from the subsea umbilical to the resident system to determine battery configurations and capacity.

14. The method of deploying a remotely operated vehicle subsea of Claim 10, further comprising:
a. deploying a buoy-based electric power system (1b) proximate a location at which the remotely operated vehicle (ROV) (200) subsea is deployed, the buoy-based electric power system comprising:
i. a surface buoy (3), comprising:
1. a housing (31);
2. a controller (32) disposed within the housing;
3. an electric power generator (1d) disposed within the housing and operatively in communication with the controller; and
4. a surface buoy power outlet (1h) operatively in communication with the electrical power generator; and
ii. a battery bank (510) configured for use subsea, comprising:
1. a housing (511) configured to withstand subsea pressure;
2. a predetermined set of batteries (512) disposed within the housing;
3. a subsea battery bank power inlet (513) operatively in communication with the surface buoy power outlet and with the predetermined set of batteries; and
4. a subsea battery bank power outlet (514) operatively in communication with the predetermined set of batteries;
b. generating electrical power at the power generator; and
c. providing the generated electrical power to the electrical power supply (700) or the RTMS power supply (211).

15. The method of deploying a remotely operated vehicle subsea of Claim 14, further comprising using an umbilical disposed intermediate the surface buoy and the subsea docking hub to operatively provide signals to the subsea docking hub and, optionally,
further comprising allowing control of the ROV from a remote location via communications between the remote location and the ROV through the surface buoy.

## Patentansprüche

1. RROV-(Residentes ferngesteuertes Fahrzeug)-System (600), das Folgendes umfasst:
a. ein ferngesteuertes Fahrzeug (ROV) (200), das zum Anordnen und Verbleiben unter Wasser für längere Zeit konfiguriert ist, wobei das ROV einen ROV-Stromanschluss (201) und eine ROV-Steuerung (207) umfasst;
b. eine dem ROV zugeordnete Stromversorgung (700), wobei die Stromversorgung Folgendes umfasst:
i. ein Gehäuse (710), das für den Unterwassereinsatz konfiguriert ist;
ii. eine Leistungsquelle (711) mit einer elektrischen Kapazität, die zum Betreiben des ROV für eine vorbestimmte Zeit ausreicht;
iii. eine Stromversorgungsbuchse (712), die operativ mit der Leistungsquelle (711) verbunden und so konfiguriert ist, dass sie selektiv mit dem ROV-Stromanschluss in operativen Eingriff gebracht werden kann;
c. ein residentes Tether-Managementsystem (RTMS) (210), das so konfiguriert ist, dass es für längere Zeit unter Wasser angeordnet werden kann, wobei das RTMS Folgendes umfasst:
i. eine RTMS-Leistungsversorgung (211);
ii. einen Hubsignalverbinder; und
iii. eine RTMS-Leistungsversorgungsbuchse (212), die so konfiguriert ist, dass sie selektiv mit der Stromversorgungsbuchse operativ verbunden werden kann;
d. einen Unterwasser-Docking-Hub, der Folgendes umfasst:
i. einen Struktur-Signalanschluss; und
ii. einen RTMS-Signalanschluss; und
e. eine Hub-Nabelschnur, die operativ mit dem RTMS-Signalanschluss und dem Hub-Signalanschluss in Kommunikation ist.

2. RROV-(Residentes ferngesteuertes Fahrzeug)-System nach Anspruch 1, wobei die RTMS-Leistungsversorgung die Stromversorgung (700) umfasst.

3. ROV-(Residentes ferngesteuertes Fahrzeug)-System nach Anspruch 1, wobei:
a. das ROV einen Schlitten umfasst, der operativ mit dem ROV verbunden ist;
b. die Stromversorgung innerhalb des Schlittens angeordnet ist; und
c. die Leistungsquelle (711) eine elektrische Kapazität aufweist, die zum Betreiben des ROV für eine vorbestimmte Zeit ausreicht.

4. RROV-(Residentes ferngesteuertes Fahrzeug)-System nach Anspruch 1, ferner mit einem Datentransceiver, der operativ mit einem Bediener an Land, einem Schiff oder einem FPSO und mit der ROV-Steuerung in Kommunikation ist.

5. RROV-(Residentes ferngesteuertes Fahrzeug)-System nach Anspruch 1, wobei
der Unterwasser-Docking-Hub-Signalanschluss einen Leistungssignalanschluss oder einen Datensignalanschluss umfasst.

6. ROV-(Residentes ferngesteuertes Fahrzeug)-System nach Anspruch 1, wobei das ROV konfiguriert ist zum Arbeiten entweder als
a. ein konventionelles, angebundenes ROV mit einer Verbindung zu einem an der Oberfläche eingesetzten Tether (201); oder als
b. ein angebundenes ROV, das so konfiguriert ist, dass es selektiv mit einem vom RTMS eingesetzten Tether (803) verbunden oder selektiv vom Tether (803) getrennt werden kann und als autonomes Unterwasserfahrzeug (AUV) funktioniert, das nicht mit dem Tether gekoppelt ist und Strom von der Stromversorgung (700) zieht.

7. ROV-(Residentes ferngesteuertes Fahrzeug)-System nach Anspruch 6, wobei das selektiv verbundene Tether (803) Folgendes umfasst:
a. einen Daten- und Leistungsverbinder für Leistung, Daten und Steuerung; und
b. einen Verbinder, der zum Ver- und Entriegeln des Tether mit dem ROV konfiguriert ist, und wobei optional
der Verbinder einen elektromechanischen oder hydraulischen Spannzangenverbinder umfasst.

8. ROV-(Residentes ferngesteuertes Fahrzeug)-System nach Anspruch 1, wobei:
a. das RTMS mehrere RTMS umfasst; und
b. das Tether eine Länge aufweist, die ausreicht, um einen vorbestimmten Arbeitsbereich abzudecken.

9. ROV-(Residentes ferngesteuertes Fahrzeug)-System nach Anspruch 1, wobei sowohl das ROV als auch das RTMS ferner ein Leistungsmanagementsystem (801, 802) umfassen.

10. Verfahren zum Einsetzen eines ferngesteuerten Fahrzeugs unter Wasser, das Folgendes beinhaltet:
a. Einsetzen eines ferngesteuerten Fahrzeugs (ROV) (200) unter Wasser, wobei das ROV zum Anordnen und Verbleiben unter Wasser für längere Zeit konfiguriert ist, wobei das ROV einen ROV-Stromanschluss (202) umfasst;
b. operatives Verbinden einer Stromversorgung (700) mit dem ROV, wobei die Stromversorgung dem ROV zugeordnet ist, wobei die Stromversorgung Folgendes umfasst:
i. eine Leistungsquelle (711) mit einer elektrischen Kapazität, die zum Betreiben des ROV für eine vorbestimmte Zeit ausreicht; und
ii. eine Stromversorgungsbuchse (712), die mit der Leistungsquelle (711) operativ verbunden und so konfiguriert ist, dass sie selektiv mit dem Stromanschluss (202) des ROV in operativen Eingriff gebracht werden kann;
c. Einsetzen eines RTMS (210) unter Wasser, wobei das RTMS so konfiguriert ist, dass es für eine längere Zeit unter Wasser angeordnet werden kann, wobei das RTMS Folgendes umfasst:
i. eine RTMS-Leistungsversorgung (211);
ii. einen Hub-Signalverbinder; und
iii. eine RTMS-Stromversorgungsbuchse (212), die so konfiguriert ist, dass sie selektiv mit der Stromversorgungsbuchse operativ verbunden werden kann;
d. Einsetzen eines Unterwasser-Docking-Hub, das Folgendes beinhaltet:
einen Signalanschluss, der operativ mit einer Unterwasserstruktur in Kommunikation ist, die operativ mit einer Oberflächenstruktur und einem RTMS-Signalanschluss in Kommunikation ist;
e. Einsetzen einer Hub-Nabelschnur, die operativ mit dem RTMS-Signalanschluss und dem Hub-Signalanschluss unter Wasser in Kommunikation ist;
f. operatives Verbinden des ROV und des RTMS mit dem Unterwasser-Docking-Hub;
g. Verbinden einer Nabelschnur zwischen dem Unterwasser-Docking-Hub und einer Unterwasserstruktur; und
h. Zuführen eines Signals von der Unterwasserstruktur an das ROV.

11. Verfahren zum Einsetzen eines ferngesteuerten Fahrzeugs unter Wasser nach Anspruch 10, wobei die Zufuhr des Signals Folgendes beinhaltet:
a. operatives Verbinden der Unterwasserstruktur mit einer Oberflächenstruktur oder einer Landbasis, an der eine Steuerkonsole personell besetzt ist;
b. Zuführen eines Signals zur Unterwasserstruktur von der Steuerkonsole; und
c. Zuführen des Signals zum ROV und zum RTMS über die Nabelschnur und optional
wobei das Signal ein Leistungssignal und ein Datenkommunikationssignal umfasst.

12. Verfahren zum Einsetzen eines ferngesteuerten Fahrzeugs unter Wasser nach Anspruch 10, das ferner Folgendes beinhaltet:
a. Konfigurieren des ROV für Operationen entweder in einem angebundenen ROV-Modus oder in einem unangebundenen AUV-(Autonomous Underwater Vehicle)-Modus, in dem das ROV nicht mit einem ROV-Tether gekoppelt ist und Strom aus einem am ROV montierten Batterieschlitten zieht; und
b. Versorgen, beim Betrieb im AUV-Modus, des ROV mit einem vorbestimmten Satz vorprogrammierter Missionsziele, wobei der vorbestimmte Satz vorprogrammierter Missionsziele Folgendes umfasst:
i. Navigation zu einer Position unter Wasser;
ii. Ausführung einer vorbestimmten Funktion;
iii. Navigation des ROV zum RTMS, und das ferner optional
das Wiederverbinden des zurückgekehrten ROV mit dem ROV-Tether beinhaltet, um in den ROV-Modus zurückzukehren und die Batterien wieder aufzuladen.

13. Verfahren zum Einsetzen eines ferngesteuerten Fahrzeuges unter Wasser nach Anspruch 10, wobei die Leistungsquelle (711) ferner eine Batterie umfasst, wobei das Verfahren ferner Folgendes beinhaltet:
a. Zulassen, dass die von der Unterwassernabelschnur an das residente System gelieferte Leistungsmenge variiert; und
b. Verwenden der tatsächlichen von der Unterwassernabelschnur an das residente System gelieferten Leistungsmenge zum Bestimmen von Batteriekonfigurationen und -kapazität.

14. Verfahren zum Einsetzen eines ferngesteuerten Fahrzeugs unter Wasser nach Anspruch 10, das ferner Folgendes beinhaltet:
a. Einsetzen eines bojengestützten elektrischen Leistungssystems (lb) in der Nähe eines Ortes, an dem das ferngesteuerte Fahrzeug (ROV) (200) unter Wasser eingesetzt wird, wobei das bojengestützte elektrische Leistungssystem Folgendes umfasst:
i. eine Oberflächenboje (3), die Folgendes umfasst:
1. ein Gehäuse (31);
2. eine Steuerung (32), die in dem Gehäuse angeordnet ist;
3. einen Stromgenerator (1d), der in dem Gehäuse angeordnet und operativ mit der Steuerung in Kommunikation ist; und
4. eine Oberflächenbojen-Leistungsbuchse (1h), die operativ mit dem Stromgenerator in Kommunikation ist, und
ii. einen Batteriesatz (510), der für den Unterseeeinsatz konfiguriert ist und Folgendes umfasst:
1. ein Gehäuse (511), das so konfiguriert ist, dass es Unterwasserdruck standhält;
2. einen vorbestimmten Satz von Batterien (512), die in dem Gehäuse angeordnet sind;
3. einen Unterwasser-Batteriesatz-Leistungseingang (513), der operativ mit der Oberflächenbojen-Leistungsbuchse und mit dem vorbestimmten Satz von Batterien in Kommunikation ist; und
4. eine Unterwasser-Batteriesatz-Leistungsbuchse (514), die operativ mit dem vorbestimmten Batteriesatz in Kommunikation ist;
b. Erzeugen von Strom am Stromgenerator; und
c. Übertragen des erzeugten Stroms zur Stromversorgung (700) oder zur RTMS-Leistungsversorgung (211).

15. Verfahren zum Einsetzen eines ferngesteuerten Fahrzeugs unter Wasser nach Anspruch 14, das ferner die Verwendung einer zwischen der Oberflächenboje und dem Unterwasser-Docking-Hub angeordneten Nabelschnur beinhaltet, um dem Unterwasser-Docking-Hub Signale operativ zuzuführen, und das ferner optional
das Zulassen der Steuerung des ROV von einem entfernten Ort über Kommunikationen zwischen dem entfernten Ort und dem ROV durch die Oberflächenboje beinhaltet.

## Revendications

1. Système véhicule télécommandé résident (RROV) (600), comprenant :
a. un véhicule télécommandé (ROV) (200) configuré pour être disposé sous la mer et pour y résider pendant une durée prolongée, le ROV comprenant un port connecteur d'énergie électrique de ROV (201) et un contrôleur de ROV (207) ;
b. une alimentation électrique (700) dédiée au ROV, l'alimentation électrique comprenant :
i. un boîtier (710) configuré pour une utilisation sous-marine ;
ii. une source d'alimentation (711) ayant une capacité électrique suffisante pour alimenter le ROV pendant une durée prédéterminée ;
iii. une prise d'alimentation électrique (712) connectée de manière fonctionnelle à la source d'alimentation (711) et configurée pour être mise en contact de manière fonctionnelle et sélective avec le port connecteur d'énergie électrique de ROV ;
c. un système résident de gestion d'arrimage (RTMS) (210) configuré pour être disposé sous la mer pendant une durée prolongée, le RTMS comprenant :
i. une alimentation de RTMS (211) ;
ii. un connecteur de signal de concentrateur ; et
iii. une prise de courant d'alimentation de RTMS (212) configurée pour être connectée de manière fonctionnelle et sélective à la prise d'alimentation électrique ;
d. un concentrateur d'accueil sous-marin, comprenant :
i. un port connecteur de signal de structure ; et
ii. un port connecteur de signal de RTMS ; et
e. une interface ombilicale de concentrateur en communication fonctionnelle avec le port connecteur de signal de RTMS et le port connecteur de signal de concentrateur.

2. Système véhicule télécommandé résident (RROV) selon la revendication 1, dans lequel l'alimentation de RTMS comprend l'alimentation électrique (700).

3. Système véhicule télécommandé résident (ROV) selon la revendication 1, dans lequel :
a. le ROV comprend un châssis mobile connecté de manière fonctionnelle au ROV ;
b. l'alimentation électrique est disposée dans le châssis mobile ; et
c. la source d'alimentation (711) comprend une capacité électrique suffisante pour alimenter le ROV pendant une durée prédéterminée.

4. Système véhicule télécommandé résident (RROV) selon la revendication 1, comprenant en outre un émetteur-récepteur de données en communication fonctionnelle avec un opérateur à terre, un navire ou une FPSO et avec le contrôleur de ROV.

5. Système véhicule télécommandé résident (RROV) selon la revendication 1, dans lequel :
le port connecteur de signal de concentrateur d'accueil sous-marin comprend un port connecteur de signal d'alimentation ou un port connecteur de signal de données.

6. Système véhicule télécommandé résident (ROV) selon la revendication 1, dans lequel le ROV est configuré pour fonctionner comme :
a. un ROV arrimé conventionnel comprenant une connexion à un arrimage déployé en surface (201) ; ou
b. un ROV arrimé configuré pour être connecté de manière sélective à un arrimage (803) déployé depuis le RTMS ou pour être déconnecté de manière sélective de l'arrimage (803) et pour fonctionner comme un véhicule sous-marin autonome (AUV) qui n'est pas accouplé à l'arrimage et qui prélève un courant de l'alimentation électrique (700).

7. Système véhicule télécommandé résident (ROV) selon la revendication 6, dans lequel l'arrimage (803) connecté de manière sélective comprend :
a. un connecteur de données et d'alimentation pour l'alimentation, les données et le contrôle ; et
b. un connecteur configuré pour verrouiller et déverrouiller l'arrimage au ROV et, éventuellement,
dans lequel le connecteur comprend un connecteur à pince de type électromécanique ou hydraulique.

8. Système véhicule télécommandé résident (ROV) selon la revendication 1, dans lequel :
a. le RTMS comprend une pluralité de RTMS ; et
b. l'arrimage comprend une longueur suffisante pour assurer une couverture pour une surface prédéterminée de travail.

9. Système véhicule télécommandé résident (ROV) selon la revendication 1, dans lequel le ROV et le RTMS comprennent chacun en outre un système de gestion d'alimentation (801, 802).

10. Procédé de déploiement sous la mer d'un véhicule télécommandé, comprenant les étapes consistant à :
a. déployer sous la mer un véhicule télécommandé (ROV) (200), le ROV étant configuré pour être disposé sous la mer et pour y résider pendant une durée prolongée, le ROV comprenant un port connecteur d'énergie électrique de ROV (202) ;
b. connecter de manière fonctionnelle une alimentation électrique (700) au ROV, l'alimentation électrique étant dédiée au ROV, l'alimentation électrique comprenant :
i. une source d'alimentation (711) ayant une capacité électrique suffisante pour alimenter le ROV pendant une durée prédéterminée ; et
ii. une prise d'alimentation électrique (712) connectée de manière fonctionnelle à la source d'alimentation (711) et configurée pour être mise en contact de manière fonctionnelle et sélective avec le port connecteur d'énergie électrique de ROV (202) ;
c. déployer sous la mer un RTMS (210), le RTMS étant configuré pour être disposé sous la mer pendant une durée prolongée, le RTMS comprenant :
i. une alimentation de RTMS (211) ;
ii. un connecteur de signal de concentrateur ; et
iii. une prise de courant d'alimentation de RTMS (212) configurée pour être connectée de manière fonctionnelle et sélective à la prise d'alimentation électrique ;
d. déployer un concentrateur d'accueil sous-marin, comprenant :
un port de connecteur de signal en communication fonctionnelle avec une structure sous-marine qui est en communication fonctionnelle avec une structure de surface et un port connecteur de signal de RTMS ;
e. déployer sous la mer une interface ombilicale de concentrateur en communication fonctionnelle avec le port connecteur de signal de RTMS et le port connecteur de signal de concentrateur ;
f. connecter de manière fonctionnelle le ROV et le RTMS au concentrateur d'accueil sous-marin ;
g. connecter une interface ombilicale du concentrateur d'accueil sous-marin à une structure sous-marine ; et
h. fournir un signal de la structure sous-marine au ROV.

11. Procédé de déploiement sous la mer d'un véhicule télécommandé selon la revendication 10, dans lequel la fourniture du signal comprend les étapes consistant à :
a. connecter de manière fonctionnelle la structure sous-marine à une structure de surface ou à une base côtière où une console de contrôle est pilotée ;
b. fournir un signal à la structure sous-marine depuis la console de contrôle ; et
c. fournir le signal au ROV et au RTMS par l'intermédiaire de l'interface ombilicale et, éventuellement,
dans lequel le signal comprend un signal d'alimentation et un signal de communication de données.

12. Procédé de déploiement sous la mer d'un véhicule télécommandé selon la revendication 10, comprenant en outre les étapes consistant à :
a. configurer le ROV pour qu'il fonctionne dans un mode de ROV arrimé ou dans un mode de véhicule sous-marin autonome (AUV) non arrimé dans lequel le ROV n'est pas accouplé à un arrimage de ROV et prélève un courant d'un châssis mobile de batteries monté sur le ROV ; et
b. quand le ROV fonctionne dans le mode AUV, fournir au ROV un ensemble prédéterminé d'objectifs de mission préprogrammés, l'ensemble prédéterminé d'objectifs de mission préprogrammés comprenant :
i. la navigation jusqu'à une position sous la mer ;
ii. la réalisation d'une fonction prédéterminée ;
iii. la navigation du ROV jusqu'au RTMS et, éventuellement, comprenant en outre la reconnexion du ROV revenu à l'arrimage de ROV pour retourner dans le mode ROV et recharger les batteries.

13. Procédé de déploiement sous la mer d'un véhicule télécommandé selon la revendication 10, dans lequel la source d'alimentation (711) comprend en outre une batterie, le procédé comprenant en outre les étapes consistant à :
a. permettre la variation de la quantité d'énergie délivrée de l'interface ombilicale sous-marine au système résident ; et
b. utiliser la quantité réelle d'énergie délivrée de l'interface ombilicale sous-marine au système résident pour déterminer des configurations et une capacité de batterie.

14. Procédé de déploiement sous la mer d'un véhicule télécommandé selon la revendication 10, comprenant en outre les étapes consistant à :
a. déployer un système d'alimentation électrique basé sur une bouée (1b) à proximité d'une localisation où le véhicule télécommandé (ROV) (200) est déployé sous la mer, le système d'alimentation électrique basé sur une bouée comprenant :
i. une bouée de surface (3), comprenant :
1. un boîtier (31) ;
2. un contrôleur (32) disposé dans le boîtier ;
3. un générateur d'énergie électrique (1d) disposé dans le boîtier et en communication fonctionnelle avec le contrôleur ; et
4. une prise de courant de bouée de surface (1h) en communication fonctionnelle avec le générateur d'énergie électrique ; et
ii. un banc de batteries (510) configuré pour une utilisation sous-marine, comprenant :
1. un boîtier (511) configuré pour résister à une pression sous-marine ;
2. un ensemble prédéterminé de batteries (512) disposées dans le boîtier ;
3. une entrée d'alimentation sous-marine de banc de batteries (513) en communication fonctionnelle avec la prise de courant de bouée de surface et avec l'ensemble prédéterminé de batteries ; et
4. une prise de courant sous-marine de banc de batteries (514) en communication fonctionnelle avec l'ensemble prédéterminé de batteries ;
b. générer un courant électrique au niveau du générateur d'énergie ; et
c. fournir le courant électrique généré à l'alimentation électrique (700) ou à l'alimentation de RTMS (211).

15. Procédé de déploiement sous la mer d'un véhicule télécommandé selon la revendication 14, comprenant en outre l'étape consistant à utiliser une interface ombilicale disposée entre la bouée de surface et le concentrateur d'accueil sous-marin pour fournir de manière fonctionnelle des signaux au concentrateur d'accueil sous-marin et, éventuellement,
comprenant en outre l'étape consistant à permettre un contrôle du ROV depuis une localisation distante par l'intermédiaire de communications entre la localisation distante et le ROV par l'intermédiaire de la bouée de surface.
